# EUROPEAN PATENT SPECIFICATION

(11) **EP 1 816 432 B1**
(45) Date of publication and mention of the grant of the patent: **19.11.2008**
(21) Application number: 07101782.6
(22) Date of filing: 06.02.2007
(51) Int. Cl.: G01B 11/16, G01D 5/26, G01D 5/353, G02B 6/36, G01K 11/32, G01L 1/24, G01L 11/02, G01P 15/093

(54) **Fiber optic strain gage**
Glasfaserdehnungsmesser
Jauge de contrainte à fibres optiques

(30) Priority: 06.02.2006 US 765547 P
(43) Date of publication of application: 08.08.2007
(73) Proprietor: Micron Optics, Inc., Atlanta, GA 30345 (US)
(72) Inventor: Ferguson, Steve, Lawrenceville, GA 30043 (US)
(74) Representative: D'Halleweyn, Nele Veerle Trees Gertrudis

(56) References cited:
- EP-A- 1 679 497
- WO-A-01/33179
- JP-A- 2005 091 151

## Description

### BACKGROUND OF THE INVENTION

In the past few years, fiber optic-based strain gages have gained acceptance in the market as an alternative to conventional electronic gages which are based, for example, on changes in electrical resistance, inductance or capacitance. In many applications, such as civil structure monitoring, down-hole oil and gas applications, as well as marine, and aerospace applications, fiber optic gages offer several advantages over conventional gages. Unlike electronic gages, fiber-based gages are not sensitive to electromagnetic interference and are well suited for use in electrically-noisy environments. Fiber-based gages are also readily multiplexed, allowing many gages to operate on a single fiber over long distances. Fiber-based gages can be made very small and lightweight for use in confined spaces. Fiber-based gages can also be made to withstand high temperature and corrosive environments.

A wide variety of optical gages are available that utilize various optical properties to measure the physical property of interest. These gages are designed to respond to the physical property to be measured by a change in amplitude, phase, polarization state, or other optical property of light transmitted through the fiber. Depending on the gage design, one or more of these optical properties can be monitored by an interrogation unit and converted to the physical property of interest.

The current invention relates to optical gages designed to measure strain on the surface of a test specimen. The gages of this invention is designed to be installed and used in a manner similar to conventional electronic foil strain gages, but to have the advantages of an all-optical gage. The gage of this invention is constructed to allow surface strain on the test specimen to be transferred to a length of optical fiber containing a Bragg grating. As strain is applied to the fiber, the optical spectrum center wavelength reflected by the Bragg grating shifts in wavelength. This shift in wavelength can be converted directly to units of strain.

In this type of gage, the fiber is often mounted to a carrier for ease of mounting onto the test specimen and ease of handling. The gage carrier is typically made of a plastic film or thin metal shim. Plastic films work well in applications where the gage is applied to the test specimen with epoxy or other adhesives. Metal carriers are commonly used in applications where the gage is spot welded to the test specimen. Strain gages mounted on metal carriers are versatile because they can be installed quickly on various test specimens. The carrier can be attached to the test specimen in various ways, e.g., employing epoxy or spot welding. Although the use of a carrier for such gages significantly improves handling and mounting, its use can also degrade gage performance. The gage carrier is positioned between the test specimen and the sensing element, requiring that strain from the test specimen is passed through the carrier to the fiber. This can result in a loss of sensitivity. Further, the gage carrier must be carefully mounted, so that strain is passed through the carrier fully and uniformly without deforming the carrier. Distortion of the carrier other than by pure linear strain, can result in loss of accuracy of measurement because the sensing element is not exposed to the true strain present in the test specimen. Additionally, the stiffness of the carrier material itself can influence the strain measurement by reinforcing the stiffness of the test specimen. This occurs in electronic foil strain gages as well as fiber based optical gages.

U.S. patent 6,834,552 relates to a fiber-optical strain-gauge in which strain conveyed from a test specimen changes the distance between two fiber ends which in turn results in a change in transmission of light between the two fiber ends. The optical fiber ends are held aligned in a carrier. The carrier construction is described as providing a strain-dependent, relative movement of the optical fiber ends in a direction substantially perpendicular to the axial direction of the optical fibers so that a change in transmission of light between the fiber ends is a measure of the strain applied to the carrier from the test specimen. A carrier is described as having two fiber holding elements in which the two fiber ends are held aligned with a gap established between the ends, two fixation zones for attaching to the test specimen, and two double-hinge zones which convert axial relative movement of the fixation zones into oppositely directed vertical movements of the holding elements and the fiber ends held in the holding elements. Additionally, a carrier is described in which the two double-hinge zones convert axial relative movements of the fixation zones into oppositely horizontal movements of the holding elements.

U.S. patent 7,068,869 relates to a passive athermal fiber Bragg grating (FBG) strain gage in which the carrier or package of the fiber Bragg grating is constructed to cancel temperature sensitivity of the gage. The strain gage is described as having a frame and pointer with a fiber-to-frame engagement means and a fiber-to-pointer engagement means, and means for attaching the frame to a structure to be monitored. The pointer is an element having threads which is threaded through an aperture in the frame so that the length of the pointer extending into the frame can be adjusted which in turn allows the length of the fiber segment between attachment points on the frame to be adjusted. The frame is described as having "flexures" which "allow strain at minimum stress to be applied to the FBG."

U.S. patent 7,134,219 relates to a fiber optic gap gauge which employs a Fabry-Perot interferometer (FPI) strain sensor. The gauge is described as having a base with an elongated tension bar, a pair of end connectors adjacent opposite ends of the tension bar and at least one spring connecting each end of the tension bar to a corresponding end connector. The tension bar is provided with a hollow cavity and slotted grooves so that the strain sensor can be introduced to measure strain in the base and particularly in the hollow cavity of the base. A bow spring having a pair of ends is described as being connected through its ends to corresponding end connectors of the base with middle section of the bow spring bowed away from the base to define a gap between the middle of the bow spring and the base. Application of a force to the middle of the bow spring decreases the gap and exterts a tensile force axially on the base. Strain is measured using the (FPI) strain sensor and strain is indicative of the change in the gap. The strain sensor does not contain a fiber Bragg grating and the optical fiber which conveys light between the strain sensor and an external Fabry-Perot cavity where light is modulated.

JP 2005 091151 discloses a gage carrier with two mounting surfaces for mounting the strain gage onto a surface of a test specimen and two fiber fastening elements attached to the mounting surfaces for securing the optical fiber parallel to the longitudinal carrier axis.

The current invention provides, according to claim 1, a gage carrier design for use with fiber optic strain sensors comprising one or more FBGs which provides the benefits of a carrier for ease of handling and mounting without degrading gage performance.

### SUMMARY OF THE INVENTION

The present invention provides a fiber optic strain gage that provides the benefits of a pre-mounted strain gage without degrading gage performance. The gage is quickly and easily attached to a test specimen. The gage includes a carrier having means for attachment to the test specimen, and means for holding a continuous length of optical fiber. The carrier is made of any appropriate material including metal, ceramic or plastic. In a specific embodiment, the carrier is a metal carrier. In another embodiment, the carrier is made of metal that can be welded to the test specimen and in particular that can be welded to a test specimen using equipment currently used to weld traditional metal backed electronic foil strain gages to test specimens. In alternative embodiments, the carrier can be attached to the test specimen using epoxy or other suitable adhesive. The gage carrier is selectively compliant along the axis of strain measurement. The carrier provides very little resistance to strain along the axis of measurement; therefore, the test specimen does not have to work against the stiffness of the metal gage carrier.

An optical fiber containing one or more fiber Bragg gratings is the active strain sensing transducer in the gages herein. The gage carrier serves several important purposes in facilitating the use of an optical fiber Bragg grating as a strain gage. The gage carrier serves as a fiber holding fixture providing a packaged device that is easily handled. The gage carrier provides protection to the fiber during installation and in use. The gage carrier also provides features that allow quick and reliable attachment to the test specimen.

An additional aspect of this invention is a fiber Bragg grating strain gage exhibiting the accuracy and sensitivity of gages that are not pre-mounted to a carrier while providing the convenience of a pre-mounted gage. In a preferred embodiment, at least a portion of the gage carrier is elastic with respect to expansion, compression or both along its longitudinal axis, thereby allowing for variation of the distance between the two points at which the gage carrier is attached to the test specimen. In this embodiment, the gage carrier is designed to allow elasticity in only one or more specific regions of the carrier while the remainder of the carrier remains substantially rigid. In a specific embodiment, gage carriers of the present invention function as two independent rigid fiber fastening elements separated by a compliant or flexible member. This construction allows the fiber to be rigidly attached to the test specimen at two points without constricting variations in the relative distance between the attach points caused be strain.

In an exemplary carrier and strain gage of the present invention, the elasticity of the gage carrier is provided by a system of channels created in the unitary body, preferably channels oriented perpendicular to the longitudinal axis. The channel system of the unitary body may create one or more springs in the unitary body. Exemplary spring configurations include, but are not limited to, folded beam springs.

In another exemplary carrier and strain gage of the present invention, the elasticity of the gage carrier is provided by introducing one or more cavities into the carrier body in the support bar between the fiber attachment points. The cavity or cavities may create one or more springs in the support bar or unity body, in a specific embodiment one or two bow springs are formed in the support bar of the carrier.

Strain gage carriers of the present invention are readily attached to a test specimen using common spot welding techniques. In addition, they may also be attached to a test specimen using epoxy or other adhesives. Fiber optic strain gages attached with adhesives perform well in many applications when proper surface preparation, cleaning and adhesive curing procedures are followed.

In another embodiment, the gage carrier is fabricated of a material other than metal. Spot welding of the strain gage carrier to the test specimen requires a metallic carrier. When the gage is attached using adhesives, clamps, or screws, a nonmetallic carrier (e.g., ceramic or plastic) may be used.

The invention provides strain measuring systems comprising one or more of the gages of this invention in combination with a light source for coupling light of an appropriate range of wavelengths into the optical fiber of the gage and in combination with a detector for monitoring light reflected from the fiber Bragg grating in the fiber and/or for monitoring light passing through the fiber Bragg grating (e.g., a notch spectrum). In sensing systems, gages of this invention can be optically coupled in series or in parallel with appropriate provision of light from a light source and appropriate monitoring of light reflected by or transmitted by the fiber Bragg grating.

The invention also provides various measuring devices which incorporate one or more fiber optic strain gages of this invention. These devices include temperature and pressure measurement gages, accelerometers, and displacement sensors, among others.

The invention additionally provides methods for measuring strain in a test specimen employing one or more strain gages of this invention. In this method, the strain gage is mounted on a test specimen in a desired location. In a specific embodiment, the gage is mounted on the test specimen such that the longitudinal axis of the gage is aligned with the axis of the test specimen in which strain is to be measured. Light of appropriate wavelength is coupled into the optical fiber of the strain gage and light reflected by the fiber Bragg grating of the optical fiber is detected. Detection can be performed by detecting reflected light or indirectly by detecting light transmitted though the fiber Bragg grating (detecting the notch resulting from reflection by the fiber Bragg grating). Changes in the wavelength reflected by the fiber Bragg grating are related to strain in the gage and in the test specimen.

### BRIEF DESCRIPTION OF THE DRAWINGS

Fig.1 is a schematic drawing illustrating an exemplary fiber Bragg grating strain gage.
Fig.2 is a schematic drawing illustrating an exemplary gage carrier of the strain gage of Fig. I
Fig.3 is a more detailed view of an exemplary elastic region of the gage carrier. In this case, introduction of the channels in the support bar forms a folded beam spring in a portion of the support bar.
Fig.4 is a more detailed view of an exemplary fiber fastening element for the gage carrier.

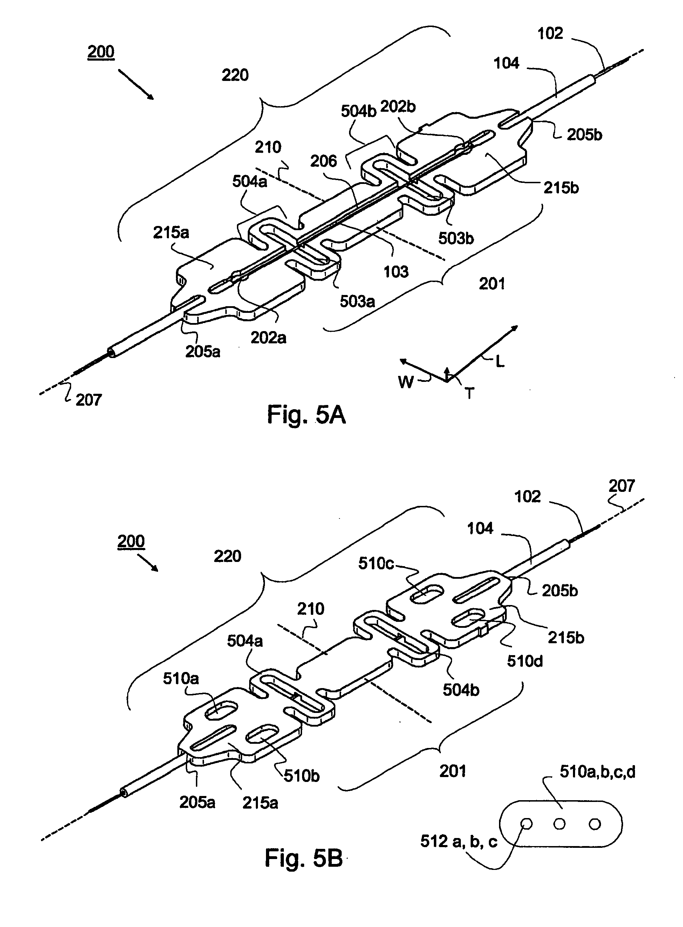

Figs. 5A and B are schematic illustrations of another exemplary gage carrier of this invention with an optical fiber with Bragg grating fastened in place in the gage. In this case two spaced apart cavities are introduced into the support bar of the carrier and form springs, which can be bow springs, in the support bar. Fig. 5A is a perspective view of the underside of the gage and its carrier. When mounted on a test specimen, the carrier underside is in contact with the test specimen. Fig. 5B is a perspective view of the top side of the gage and its carrier. This side of the carrier is illustrated with optional weld pockets to facilitate welding of the gage to a test specimen.

### DETAILED DESCRIPTION OF THE INVENTION

Referring to the drawings, like numerals indicate like elements and the same number appearing in more than one drawing refers to the same element. In addition the following definitions apply:
"Elastic" refers to the capability of a material, object, device or device component to increase or decrease size with respect to one or more physical dimensions. Elastic materials may be extensible, compressible or both. Elasticity refers to a characteristic of a material, object, device or device component having elasticity.
"Rigid" refers to a material deficient in or devoid of elasticity.
"Unitary body" refers to a body or object made up of a continuous or contiguous piece of material or made up of separate components that are operationally attached to each other. Unitary bodies do not comprise physically separated, discontinuous elements. Preferred unitary bodies are fabricated from a single material. However, a unitary body may comprise a plurality of components that are connected to each other by a fastener such as a weld joint, glue, epoxy, a screw, bolt, clamp, a clasp, or any equivalent of these.
"Parallel to the longitudinal axis" refers to a direction that is defined by an axis that extends in the same direction as, and is everywhere equidistant to the longitudinal axis.
"Perpendicular to the longitudinal axis" refers to a direction that is defined by an axis positioned at an angle of 90 degrees relative to longitudinal axis.

It will be appreciated that in descriptions herein with respect, for example, to direction, alignment, relative position of device elements and shape of device elements that some level of deviation from the described alignment, direction, position or shape can be tolerated without detriment to the function of the device or device element. For example, it certain embodiments, the carrier is preferably symmetrical with respect to one or more axes of the carrier. It will be appreciated that level of dissymmetry with respect to device element shapes can be tolerated without loss of function..

"Spring" refers to an elastic body or device that recovers its original shape when released after being distorted. Springs of the present invention may have a variety modulus of elasticity, such as the modulus associated with stainless steel alloy springs. Springs of the present invention may comprise a curved or bent body that can be pressed into a smaller space but upon release returns to its initial shape. The term "bow spring" refers to a material or body having one or more cavities preferably rectangular or U-shaped cavity, which may be compressed or expanded upon the application of a force. The term "folded beam spring" refers to a material or body having at least one channel, thereby creating a beam with one or more folds, which may be compressed or expanded upon the application of a force. The springs of the carriers of this invention are preferably formed such that the carrier can be compressed or expanded along its longitudinal axis.

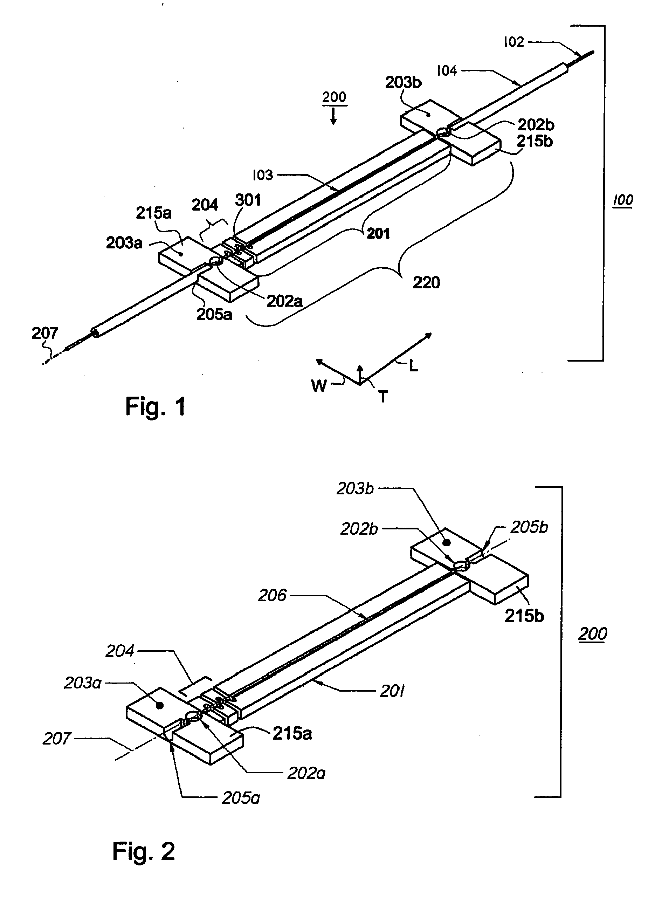

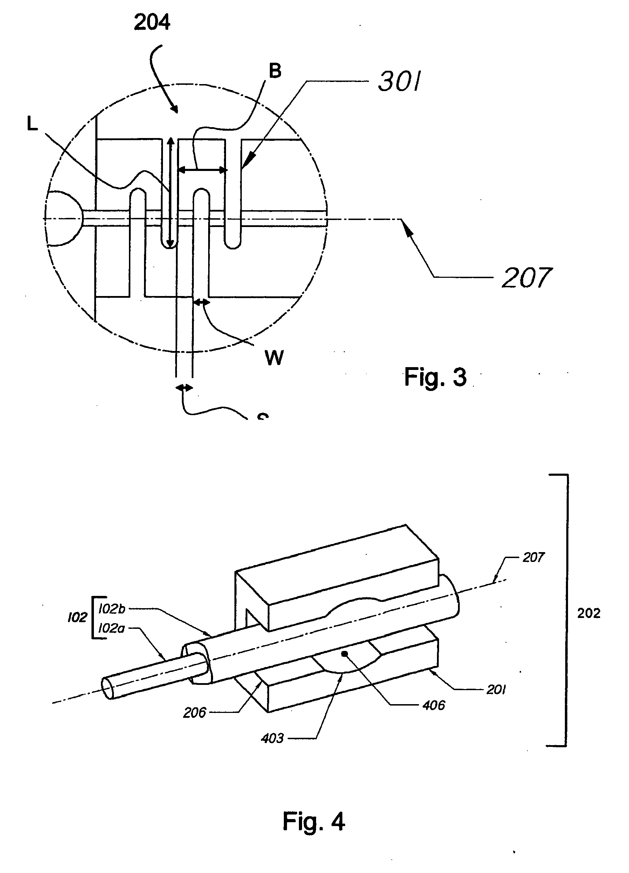

Fig. 1 illustrates an exemplary embodiment of a carrier mounted fiber Bragg grating strain gage of the present invention. Fig.2 illustrates the carrier portion of the gage that supports the fiber. Fig. 3 shows a close up view of an exemplary elastic region of the gage carrier. Fig. 4 shows details of an exemplary optical fiber fastening element which is generally useful in any carrier-mounted strain gage of this invention.

Specifically, Fig. 1 provides a perspective view of the assembled gage (100) with optical fiber in place. The gage comprises gage carrier (200), optical fiber (102), Bragg grating (103) in the optical fiber, and optional buffer tubes (104) for protecting the optical fiber. For reference purposes, Fig. 1 shows the length, width and thickness dimensions of the gage and its carrier. Fig. 1 shows the longitudinal axis 207 of the gage and its carrier. It will be appreciate that the carrier also has a lateral axis (not shown) that is perpendicular to the longitudinal axis and parallel to the width of the carrier and a vertical axis (not shown) that is perpendicular to the longitudinal axis and the lateral axis and is parallel to the thickness of the carrier. The three axes meet at a center point of the carrier. In exemplary embodiments, the carrier is substantially symmetrical with respect to one or more of these axes. In specific embodiments, the carrier is substantially symmetrical with respect to the longitudinal axis. As illustrated the optical fiber is held within the carrier and attached to the carrier at two fiber fastening elements (202a and 202b). As described in more detail below, the optical fiber is preferably pretensioned prior to being fastened to the carrier. The optical fiber is positioned along the longitudinal axis of the gage and its carrier. The optical fiber carries at least one fiber Bragg grating in the length of fiber between the points at which the fiber is fastened to the carrier.

In operation for measurement of strain, the gage is attached to a test specimen, light from an appropriate light source is coupled into the optical fiber and light reflected by the Bragg grating or light transmitted through the Bragg grating is monitored with a suitable detector. The wavelength of light reflected by the Bragg grating is responsive to strain applied to the optical fiber containing the Bragg grating.

Figure 2 illustrates an exemplary embodiment of a gage carrier of the present invention capable of providing convenient handling and mounting of the gage without compromising performance. The illustrated carrier (200) comprises a support bar 201, a first fiber fastening element (202a), a second fiber fastening element (202b), a first mounting surface (203 a), and a second mounting surface (203b), and an elastic region. (204). The carrier optionally has strain relief elements (205a) and/or (205b) to protect the optical fiber on entrance, exit or both from the gage carrier. The mounting surfaces provide sites for attachment of the gage to a test specimen. The mounting surfaces are provided on mounting elements 215a and b which are attached, respectively, to either end of the support bar. The fiber fastening elements can be provided as illustrated in each of the mounting elements or may be positioned, respectively, at either end of the support bar. The fiber fastening elements are rigidly attached to the mounting surfaces, for example by being formed in or rigidly attached to the mounting elements which carrying the mounting surfaces, so that when the gage is rigidly mounted to the test specimen, the fiber fastening elements are each rigidly attached to the test specimen. The support bar extends in the carrier between the points of rigid attachment of the optical fiber and the support bar has at least one region that is elastic.

In practice, gage (100) is mounted to a test specimen by any means that achieves a rigid attachment, such as by forming an adhesive bond between the test specimen and at least a portion of each of the mounting surfaces, or by spot welding the mounting surfaces to the test specimen. Weld pockets as illustrated in Fig. 5B are optionally provided to facilitate welding.

The fiber is rigidly attached to the gage carrier with two independent fiber fastening elements (202a) and (202b). The first fiber fastening element and the first mounting surface are separated from the second fiber fastening element and the second mounting surface by elastic region (204) of the gage carrier.

The elastic region effectively acts as a spring and can serve at least two purposes. The elastic region provides compliance so that the gage carrier can expand and contract along the longitudinal axis with little force applied. This allows the two fiber fastening elements (202a) and (202b) to follow the movement of the test specimen as it is subjected to strain. As the relative distance between fiber fastening elements (202a) and (202b) varies, the tension applied to the optical fiber varies proportionally and the center wavelength of the optical bandpass of Bragg grating (103) varies proportionally with fiber tension. The center wavelength is directly related to the strain present in the test specimen. The second function of the elastic region (204) is to provide a spring force for pre-tensioning of optical fiber (102). In a preferred embodiment, tension is applied to fiber (102) during the process of attaching fiber to fiber fastening elements (202a) and (202b). When the optical fiber is thus pretensioned, residual tension remains in the fiber allowing the gage to operate in both tension and compression.

Each mounting surface (203 a and b) is located in close proximity and rigidly attached to the corresponding fiber fastening element (202a and b), respectively. Once the gage carrier is rigidly attached to a test specimen though the mounting surfaces (203), the fiber is then rigidly attached and in intimate mechanical contact with the test specimen. In this configuration, strain is transferred directly from the test specimen to the optical fiber. It is preferred to minimize the mechanical path from the test specimen to the points of attachment of the optical fiber to maximum gage sensitivity.

In a specific embodiment, the support bar, mounting surfaces, mounting elements and fiber fastening elements form a unitary body. Preferably, the functional elements of the carrier are formed by an appropriate machining method from a single contiguous piece of a selected machinable material, e.g., a contiguous piece of stainless steel or other appropriate machinable metal. The term contiguous is used herein to refer to a device where the functional elements of the device are connected without a break in the materials from which they are formed.

In the preferred embodiment illustrated in Figures 2 and 3, a plurality of channels (301) are created in the support bar providing elasticity with respect to compression, expansion or both along longitudinal axis (207). Introduction of the channels as illustrated can be used to form a spring structure in a portion of the support bar. As shown in Figures 2 and 3, the channels (301) extend into and across the width of the bar from its sides and are oriented perpendicular to the longitudinal axis (207). The channels have a selected length (L) and channel width (W) and extend through the thickness of the bar. The channels are separated by a selected distance S. In a specific embodiment, adjacent channels extend into the bar from opposite sides of the bar, as illustrated in Fig. 3 and are separated by a distance S. In a specific embodiment, one or more pairs of adjacent channels, which channels extend into the bar from opposite sides of the bar, separated by a selected distance S form the elastic region of the bar. The system of pairs of channels (301) extending into the bar from opposite sides creates a folded structure which functions as a folded beam spring in the support bar, allowing movement of the carrier between the fiber fastening points in a direction substantially parallel to the longitudinal axis of the carrier. The length, width and distances between the channels can be varied to achieve a desired level of elasticity in the carrier. In a specific embodiment, the channels extend more than halfway through the width of the bar intersecting the longitudinal axis of the carrier. In a specific embodiment, all of the channels are the same length and width. In specific embodiments, the elastic region contains two, three or four pairs of channels.

As noted above, the channels forming the spring element in the support bar region can be introduced into a unitary body formed from a contiguous material by an appropriate form of machining. In other embodiments, such a unitary body can be formed by molding techniques.

The carrier elements and particularly the support bar portion of the carrier may comprise any material that exhibits some elasticity, but which is able to provide rigid support for fiber fastening or attachment points (202a and b). In preferred embodiments, the unitary body (220) is fabricated from a contiguous piece of material. Use of a contiguous material is preferred to simplify manufacturing of the carrier and reduce assembly cost. However, the present invention includes embodiments wherein the unitary body of the carrier is fabricated from a plurality of components that are operationally connected via an appropriate means of fastening including but not limited to a weld joint, glue, epoxy, a screw, clamp, bolt, a clasp, or any equivalent of these.

The elastic folded beam spring configuration (204) shown in more detail in Fig. 3 is but one means of providing elasticity to the gage carrier of the present invention. In the present invention any spring configuration can be employed that provides elasticity with respect to compression or expansion along the longitudinal axis of the carrier and also substantially constrains motion along all other dimensions. Springs of the present invention may have a range of spring constants allowing a useful range of preloads to be applied to the optical fiber. In addition, gage carriers of the present invention can have any number of springs. Alternative embodiments of the present invention comprise folded beam springs having a plurality of folds and a variety of beam cross sections in the folds. Yet other alternative embodiments comprise two folded beam springs spaced apart on the support bar and yet more specifically positioned near opposite longitudinal ends of the support bar. Additional embodiments comprise electrometric or polymer material incorporated into the support bar to provide desired elasticity.

In a preferred embodiment, the gage carrier (200) illustrated in Figure 2 provides a means of anchoring the optical fiber. The support bar has an axial slot (206) extending along longitudinal axis (207) for receiving the optical fiber and optionally for accommodating a tube for protecting the fiber. The slot extends through the first and second mounting elements to allow the fiber to extend through the entire carrier.

Optical fiber (102) consisting of silica fiber (102a) and protective coating (102b) is positioned in axial slot (206) and extends along longitudinal axis (207). Unitary body (201) has a hole (403) located at each of the two fiber fastening elements (202a) and (202b). The hole (403) is perpendicular to longitudinal axis (207). Hole (403) forms a pocket (406) in which epoxy, alloy solder, or glass solder can be placed. In specific embodiments, metal or alloy solders such as lead, tin, gold, silver, or indium can be used. Hole (403) also contains the adhesive or solder material until it solidifies. The adhesive or solder is captured inside hole (403) and fills the void between the fiber coating (406) and hole (403). Because the axis of the hole is perpendicular to the fiber axis, it prevents the adhesive from slipping due to tension applied along the axis of the fiber. Fiber holding elements useful in the carrier and gages of this invention including those as illustrated in Fig. 4 are described in detail in U.S. published application 2006/0285813 which is incorporated by reference herein in its entirety for a description of fiber holders useful in this invention. In preferred embodiments, the carrier includes creep-resistance optical fiber attachment mechanisms which are described in U.S. published application 2006/0285813 and references cited therein. Exemplary gage carriers of the present invention include, but are not limited to, those having any fiber fastening element providing a means of fastening an optical fiber to the unitary body including adhesives, solders, clamps, or crimps.

Figs 5A and 5B illustrate another exemplary embodiment of a strain gage and carrier of this invention. Fig. 5A illustrates the underside of the gage 100 and a carrier (200) formed as a unitary body (220) from a contiguous piece of material (e.g., stainless steel or other metal). The underside of the gage is the surface of the gage that is in contact with the test specimen. Note that the optical fiber is preferably as close as possible to, but not in contact with, the surface of the test specimen. The gage is shown with optical fiber (102) fastened in place in the gage carrier with the optical fiber positioned in slot 206 extending along longitudinal axis 207. The mounting elements (215a, b) and mounting surfaces (203a, b), fiber fastening elements (202a, b) and the support bar 201 are formed in contiguous material in unitary body 220.

The support bar region of the carrier contains one and preferably two spaced apart cavities 503a and 503b which introduce elasticity into the support bar between the fiber attachment points (202a and 202b). The shape and dimensions of the cavity affect the elasticity of the support bar and gage and these parameters can be selected to adjust elasticity. The cavity extends through the entire thickness of the support bar. The cavity can be any shape that provides elasticity in the support bar. It is preferred that the cavity walls are curved or arched surfaces to avoid sharp corners. The cavity can be circular, oval or a rounded rectangle as illustrated in Fig. 5A. The cavity may be "D"-shaped with the apex of the curve of the D intersecting the longitudinal axis of the gage/carrier. In specific embodiments, the long axis of the cavity is perpendicular to the longitudinal axis (207) of the gage. In preferred embodiments, the cavity or cavities in the support bar are symmetrical with respect to the longitudinal axis of the gage/carrier. In specific embodiments, the long axis of the cavity is longer than 50% of the width of the support bar. In other embodiments, the long axis of the cavity is longer than 75% of the width of the support bar. The cavity or cavities in the support bar of the carrier can form one or more bow springs in the support bar which exhibit elasticity along the longitudinal axis of the carrier/gage.

Fig. 5B illustrates the top side of the gage of Fig. 5A. This view shows optional weld pockets 510a, b, c and d on the unitary body that function to facilitate spot welding of the gage to a test specimen. The weld pockets provide a location for creating one or more spot welds. Each weld pocket preferably contains more than one location, e.g., 512 a, b and c for creating a spot weld. Fig. 5B illustrates a lateral axis of the carrier. In preferred embodiments, the gage carrier is symmetrically shaped with respect to its longitudinal axis and with respect to its lateral axis.

Figs. 5A and B illustrate carriers of this invention that have unitary bodies (220) which contain a support bar region (201), surface mounting elements 215 a and b, and fiber fastening elements (202 a and b). The carrier may have uniform length, width and thickness, but preferably the width will vary along the length of the carrier. Preferably the variations in width and length of the carrier are symmetrical with respect to the longitudinal axis or both the longitudinal and lateral axis of the carrier. As illustrated in Fig. 2 and Figs. 5A and B, the width in the central region of the carrier (e.g., the support bar region) can be narrower than the region of the mounting element and the support bar may be wider in the elastic region or regions than in the mounting element, again as illustrated.

In a specific embodiment a strain gage as illustrated in Figs. 5A and B made of stainless steel (gage length 24 mm, weight 1.1 g; Dimensions: 36 mm x 8 mm x 1 mm) exhibited gage factor tolerance of ± 1.0% at 21°C, could be operated over the temperature range: -40 to 120°C (and up to 150°C for short term exposure), had strain measurement limits of +/- 2500 microstrain and exhibited a fatigue life > 20x106 cycles, ± 1000 microstrain.

The elasticity introduced into the support bar of the carrier is such that the relative lateral motion of the fiber fastening points is minimized. In preferred embodiments, the support bar is symmetric with respect to the longitudinal axis of the carrier to minimize such lateral motion when strain from the test specimen is conveyed to the attached gage.

In preferred embodiments, the carrier is much thinner than it is wide, exhibiting a low profile when mounted on a test specimen. In specific embodiments, the width is 10x or more of the thickness of the carrier and in additional embodiments, the width is 20X or more of the thickness of the carrier.

As is illustrated in Figs. 5A and B the width of the support bar can vary over its length. Material can be removed from the edges of the bar region as well as from the inner regions of the bar (by introducing cavities). Removal of materials from the edges of the bar can be used to adjust the elasticity of the bar between the fiber fastening points. In a specific embodiment, the elasticity of the support bar and the carrier is adjusted such that the carrier allows application of a desired pretension to the fiber, but does not over stress the attachment of the gage to the test specimen. In a specific embodiment with a stainless steel carrier, the spring constant of the carrier is 1200 1bf/inch. For a given carrier the desired spring constant can be established experimentally. The desired spring constant is such that the carrier is stiff enough to maintain desired fiber pretension and compliant enough to flex without overstressing the spot welds or epoxy used to mount the gage to a surface.

Gage carriers of the present invention may be efficiently fabricated using electron discharge machining (EDM) techniques, which are well known in the art. For example, the unitary body components, as illustrated in Figures 2, may be fabricated from a single piece of contiguous material using EDM techniques to relieve material from the unitary body, thereby generating the desired functional elements and creating the elastic spring region of the support bar. Gage carriers of the present invention may also be fabricated using laser, water jet, or chemical etching techniques.

Gages of this invention may be bonded to a variety of surfaces (test specimen) using adhesives to form a secure bond , particularly epoxy, and more particularly a 100%-solids epoxy. As is appreciated in the art, surface preparation and cleaning can significantly affect the ability to form a secure bond. Adhesive systems known in the art and designed for use with bonded resistance strain gages can be used for the gages of this invention. These adhesives are generally available in kit form including: degreaser, conditioner, neutralizer, epoxy, and application instructions. In a typical preparation, the gage mounting surface is degreased, conditioned and neutralized to clean the surface and remove contaminants and residue from the surface which may affect boding. In addition, the surface of the test specimen is prepared. The mounting surface of the test specimen is preferably reasonably flat, free of surface defects, rust, scale, oxides, loose paint, or other coatings. The test specimen surface is also degreased, conditioned and neutralized. Adhesive is applied following manufacturer's instructions. For examples, epoxy is mixed with curing agent and a thin film is applied to the gage mounting surface, the gage is positioned as desired on the test specimen and clamped preferably with even clamping pressure over the area to be adhered. The epoxy is preferably allowed to cure at room temperature and application of a post-curing treatment at 25°F [15°C] above the maximum anticipated operating temperature is preferably for achieving creep free performance.

Gages of this invention can be mounted to appropriate test specimens using spot welding. For example, a spot welder having 50 watt-seconds minimum energy rating equipped with a small welding electrode having a spherical tip measuring approximately .030 inches [.76 mm] in diameter can be used to provide good results. The surface of the test specimen should be free of rust, scale, oil, and grease for a quality weld. Weld can be formed in weld pockets of the gage as illustrated in Fig. 5B. In a preferred welding procedure, initial welds are formed in the center of each of the four weld pockets of a gage. Thereafter additional welds can be added in each pocket (preferably three welds/pocket).

As is known and understood in the art, fiber Bragg grating-based gages respond to temperature induced strain as well as mechanically induced strains. The temperature induced strain is a consequence of the difference in coefficients of thermal expansion (CTE) between the gage and the substrate on which it is mounted which causes a strain to be induced in the gage as temperature changes and the temperature dependence of the index of refraction of the Bragg grating which causes the center wavelength of the grating to shift. Several methods are known for determining the thermal output of a gage and for temperature correction of such gages. If the thermal output of a gage is known, the mechanically induced strain can readily calculated by subtracting the thermal output from the strain measured by the active gage using methods known in the art. The thermal output of a gage can be estimated using art known methods or the thermal output of a gage can be experimentally determined using art known methods.

Art-known temperature compensation methods can also be applied with the gages of this invention. These methods typically involve the use of a second compensating dummy gage" identical to the active measurement gage. The dummy gage is mounted to a stress-free piece of material identical to the material on which the active gage is mounted and is located as close as possible to the active gage so that both gages experience the same temperature. In this configuration, the dummy gage responds to temperature in a similar way as the active gage providing a direct measurement of thermal output. In some applications, the compensating dummy gage can play an active role in the measurement of strain. In bending beam applications for example, one gage can be mounted on the top surface of the beam while a second gage is mounted on the bottom surface of the beam. When a bending load is applied to the beam, one gage will be in tension while the other gage is in equal but opposite compression. The difference in wavelength between the two gages provides a 2X reading of strain. Thermally induced strain will cause both gages to move in the same direction effectively canceling one another.

Fiber optic strain gage of the present invention may be employed as device components in a variety of devices including, but not limited to, temperature transducers, pressure transducers, instruments for measuring force, accelerometers and displacement transducers.

More specifically, the invention provides a device for measuring force comprising any strain gage of this invention wherein the strain gage is attached to a load cell responsive to the force to be measured. Also provided are devices for measuring pressure comprising any one of the strain gages of this invention wherein the strain gage is attached to a diaphragm that is responsive to the pressure to be measured. Accelerometers comprising a strain gage of this invention are further provided and particularly those in which a strain gage is attached to a mass which is responsive to the acceleration to be measured.

In specific embodiments, gage carriers comprise a support bar extending along the longitudinal axis of the carrier, a first and second mounting surface each positioned and rigidly attached at an end of the support bar for mounting the strain gage onto a surface of a test specimen and a first and second optical fiber fastening element. The fiber fastening elements are spaced apart along the length of the carrier from each other for securing the optical fiber parallel to the longitudinal axis of the carrier. The first and second fastening elements are rigidly attached to the first and second mounting surfaces, respectively. The support bar extends between the first and second fastening elements and at least a portion of the support bar is elastic with respect to expansion, compression or both along the longitudinal axis of the carrier.

The support bar can contain one or more spring elements which are formed therein by removal of material from the bar. In a preferred embodiment, the support bar is a unitary body, and more preferably is formed from a single contiguous piece of material. One or more elastic regions are introduced into the support bar by removing material from the bar to form channels or cavities in the bar. In another preferred embodiment, the mounting surfaces, the optical fiber fastening elements and the support bar form a unitary body and more specifically these elements are formed from a single contiguous piece of material.

The carrier optionally comprises a slot for receiving the optical fiber which is along the longitudinal axis of the carrier. The carrier also optionally comprises strain relief elements positioned to support the optical fiber on entrance and exit from the carrier.

In an exemplary carrier, the elastic portion of the support bar is formed by a plurality of channels in the support bar wherein the channels are oriented perpendicular to the longitudinal axis of the carrier. The plurality of channels, for example, can comprise pairs of spaced apart channels extending across at least a portion of the width of the support bar from opposite sides of the support bar. In specific embodiments, each channel is of sufficient length that it extends across the longitudinal axis of the carrier. The plurality of channels formed can be in a pattern that is symmetric with respect to the longitudinal axis of the carrier. The channels formed in the support bar can be in a pattern that is symmetric with respect to both the longitudinal and lateral axes of the carrier.

The carrier support bar can have one or more spring structures formed therein between fiber fastening points. The spring structures can be one or more folded beam springs. In specific embodiments, the support bar has one or two spring structures. In specific embodiments, the support bar has two spaced apart spring structures. For example, the support bar may have a spring structure near each longitudinal end of the bar. The spring structure may be formed by crating a cavity in the support bar. The spring structure may be a bow spring. The cavity forming the spring structure in the support bar can be symmetric with respect to the longitudinal axis of the carrier.

When more than one cavity is used to form the spring structures in the support bar, the cavities formed together can be symmetric with respect to the longitudinal axis of the carrier or can be symmetric with respect to both the longitudinal and lateral axis of the carrier. In a specific embodiment cavities introduced into the carrier increase elasticity of the support bar can have a shape that exhibits a long axis and in preferred embodiments, the cavity is created in the support bar so that its long axis is perpendicular to the longitudinal axis of the carrier. In exemplary embodiments, the support bar has one elastic region (e.g., a spring structure) positioned adjacent to one end of the support bar. In another exemplary embodiment, the support bar has two elastic regions (e.g., spring structures) positioned adjacent each end of the support bar. In additional embodiments, the elastic region of the support bar can be formed using elastomeric material.

The gage carrier may be formed of a unitary body wherein the functional components of the gage are operationally connected to each other with one or more fasteners which can be selected from the groups consisting of a weld joint, glue, epoxy, or other adhesive, a screw, a clamp, a bolt, or a clasp.

In specific embodiments, the carrier has sufficient elasticity to allow variation of the distance between the first and second fiber attachment elements along the longitudinal axis of between 250-750 microns and preferably of at least 500 microns. Preferably the gage carriers of this invention provide rigid attachment of the optical fiber, for example through the fiber fastening elements and the mounting surfaces, to a test specimen at two points while providing little resistance to variation in the distance between the attachment points along the longitudinal axis. This configuration provides for improved gage sensitivity.

In specific embodiments, the fiber in the gage is pretensioned allowing measurement of tension as well as compressive strains. In this case the carrier provides sufficient spring force for pre-tensioning of the optical fiber. In a preferred embodiment, the optical fiber is pretensioned prior to fastening into the gage by application of a selected weight (force) to the fiber. The fiber is preferably pretensioned such that provide 5000 microstrain in the fiber. A preferred gage will exhibit a +/- 2500 microstrain measurement range.

The gages of this invention contain one or more fiber Bragg gratings at least one of which is positioned in the length of fiber between the fastening points to the carrier. The fiber Bragg gratings in the gage can be provided with a protective polyimide coating or a protective metal or metal alloy coating.

The fiber can be fastening into the carrier in a variety of ways employing a variety of fastener designs. In specific embodiments, the fiber is fastened to the carrier using an adhesive, e.g., an epoxy. In other embodiments, the fiber is fastened to the carrier using mechanical means, such as by clamping or crimping. The fiber may further be fastened into a fiber holder which is rigidly attached to the carrier using solder, for example, metal or metal alloy solders or low temperature glass solder.

The strain gages of this invention can be provided with a single fiber connection extending from the gage or a double ended fiber connection emanating from the gage.

The carriers of the invention can be fabricated from various materials which can provide the desired elasticity properties discussed herein and in particular carrier or functional elements of carriers can be made, for example, from stainless steel, low expansion coefficient metal alloys, ceramics, a composite materials, plastics or polymeric materials.

The invention further provides optical fiber-based sensing systems comprising one or more of the strain gages of this invention as described herein. Such systems can comprise a plurality of strain gages which are configured in a serial configuration in which a contiguous or spliced optical fiber containing multiple fiber Bragg gratings extends between multiple gages (where there is at least one fiber Bragg grating for each strain gage in the configuration). The system may alternatively or in combination contain a plurality of gages in a parallel configuration in which the optical fibers of the gages are not optically connected to each other. In any such system, one or more appropriate light sources and one or more appropriate light detectors are provided. Various light sources and light detection systems are known in the art which can be applied in applications of the gages herein. In general, the optical fiber strain gages herein can be employed in any known fiber optic strain gage system that is known in the art in which fiber Bragg gratings are employed. In a specific embodiment, a plurality of the strain gages of this invention can be employed as components in multiaxis strain gages containing at least one gage for each test specimen axis for which strain is to be measured. In these systems, the longitudinal axis of a gage is aligned with an axis of the test specimen for which strain is to be measured.

The strain gages and carriers of this invention can further be employed as components in devices for measurement of displacement, force, pressure, temperature or acceleration. The use of strain gages in such measurement systems is known in the art and the gages herein can be applied in such systems as is known and understood in the art. In such measurement devices, the strain gage is attached to a material or object that is strained in response to the property to be measured. The property to be measured induces a strain in the responsive material or object which is then measured by the strain gage. In preferred situations the responsive material or object responds in a predictable, repeatable way when exposed to the property to be measured and ideally the response is linear. In specific embodiments, the responsive material or object is a displacement transducer (to measure displacement or a change in distance), a mass that can be accelerated (to measure acceleration), a load cell to which force can be applied (to measure force), a diaphragm that is responsive to pressure (to measure pressure) or a material or object which expands or contracts with temperature (to measure temperature).

The precise scope of the present invention is defined by the appended claims.

## Claims

1. A gage carrier (200) for a fiber optic strain gage (100) having an optical fiber (102) comprising:
a support bar (201) extending along a longitudinal axis (207) of the carrier,
a first and second mounting surface (203a, 203b) each positioned and rigidly attached at an end of the support bar for mounting the strain gage onto a surface of a test specimen,
a first and second optical fiber fastening element (202a, 202b), which are longitudinally spaced apart from each other for securing the optical fiber parallel to the longitudinal axis of the carrier,
the first fastening element rigidly attached to the first mounting surface and the second fastening element rigidly attached to the second mounting surface, the support bar extending between the first and second fastening elements wherein at least a portion (204) of the support bar is elastic with respect to expansion, compression or both along the longitudinal axis of the carrier.

2. The gage carrier of claim 1 wherein the support bar forms a unitary body.

3. The gage carrier of claim 1 wherein the first and second mounting surfaces, the first and second optical fiber fastening elements and the support bar form a unitary body.

4. The gage carrier of any one of claims 2 or 3 wherein the unitary body is fabricated from contiguous material.

5. The gage carrier of any one of claims 1-4 wherein the elastic portion of the support bar is a plurality of channels formed in the support bar wherein the channels are oriented perpendicular to the longitudinal axis of the carrier.

6. The gage carrier of claim 5 wherein the plurality of channels comprises pairs of spaced apart channels extending across at least a portion of the width of the support bar from opposite sides of the support bar.

7. The gage of claim 6 wherein each channel extends across the longitudinal axis of the carrier.

8. The gage of any one of claims 5-7 wherein the plurality of channels forms a pattern that is symmetric with respect to the longitudinal axis of the carrier.

9. The gage of any one of claims 5-8 wherein each channel of the plurality of channels extends through the entire thickness of the support bar.

10. The gage carrier of any one of claims 1-4 wherein the elastic portion of the support bar is one or more spring structures positioned or formed between the first and second optical fiber fastening elements.

11. The gage carrier of claim 10 wherein the elastic portion of the support bar is one spring structure.

12. The gage carrier of claim 10 wherein the elastic portion of the support is formed from two spring structures spaced apart on the support bar.

13. The gage carrier of any one of claims 10-12 wherein the spring structure is a formed in the support bar by introducing a cavity therein.

14. The gage carrier of claim 13 wherein the cavity forms a bow spring.

15. The gage carrier of any one of claims 13 or 14 wherein the cavity is symmetric with respect to the longitudinal axis of the carrier.

16. The gage carrier of any one of claims 13-15 wherein the length of the cavity is perpendicular to the longitudinal axis of the carrier.

17. The gage carrier of any one of claim 1-16 wherein the support bar has one elastic region positioned adjacent to one end of the support bar.

18. The gage carrier of any one of claims 1-16 wherein the support bar has two elastic regions positioned adjacent each end of the support bar.

19. The gage carrier of claim 18 wherein the carrier has a lateral axis perpendicular to the longitudinal axis and parallel to the width of the carrier and which bisects the carrier and wherein the two elastic regions are symmetrical with respect to the lateral axis.

20. The gage carrier of any one of claims 1-4 wherein the elastic region comprises or is fabricated from an elastomeric material.

21. The gage carrier of claim 1 fabricated from a plurality of components that are operationally connected with one or more fasteners.

22. The gage carrier of claim 21 wherein the fasteners are selected from a weld joint, glue, epoxy, or other adhesive, a screw, a clamp, a bolt, or a clasp.

23. The gage carrier of any one of claims 1-22 wherein the carrier has sufficient elasticity to allow variation of the distance between the first and second fiber attachment elements along the longitudinal axis of 250-750 microns.

24. The gage carrier of any one of claims 1-22 wherein the carrier has sufficient elasticity to allow variation of the distance between the first and second fiber attachment elements along the longitudinal axis of at least 500 microns.

25. The fiber gage carrier of any one of claims 1-24 which provides rigid attachment of the optical fiber to a test specimen at two points while providing little resistance to variation in the distance between the attachment points along the longitudinal axis.

26. The gage carrier of any one of claims 1-25 providing spring force for pretensioning of the optical fiber allowing measurement of tension as well as compressive strains.

27. The gage carrier of any one of claims 1-26 further comprising an axial slot along the longitudinal axis of the carrier for receiving the optical fiber when the optical fiber is rigidly attached to the carrier at the first and second fiber fastening elements.

28. The gage carrier of any one of claims 1-29 further comprising an optical fiber fastened at two points along its length to and oriented parallel to the longitudinal axis of the gage carrier, thereby forming a fiber optical strain gage, wherein the optical fiber contains one or more fiber Bragg gratings at least one of which fiber Bragg gratings is in the length of fiber between the fastening points to the carrier.

29. The fiber optical strain gage of claim 28 further comprising one or more buffer tubes for protecting the optical fiber.

30. The strain gage of any one of claims 28 or 29 wherein the optical fiber is pretensioned before it is fastened to the carrier so that the gage can function in compression as well as tension.

31. The strain gage of any one of claims 28-30 wherein the one or more fiber Bragg gratings are protected by a polyimide coating.

32. The strain gage of any one of claims 28-30 wherein the one or more fiber Bragg gratings are protected by a metal or metal alloy coating.

33. The strain gage of any one of claims 28-32 wherein fiber is fastened to the carrier using and adhesive.

34. The strain gage of any one of claims 28-32 wherein fiber is fastened to the carrier by physically clamping or crimping onto the fiber.

35. The strain gage of any one of claims 28-32 wherein the fiber is fastened to the carrier using metal or alloy solders.

36. The strain gage of any one of claims 28-32 wherein the fiber is fastened to the carrier using low temperature glass solder.

37. The strain gage of any one of claims 28-36 further comprising a single fiber connection extending from the gage.

38. The strain gage of any one of claims 28-36 having a double ended fiber connection emanating from the gage.

39. The strain gage of any one of claims 28-38 further comprising a strain relief elements to protect the optical fiber on entrance, exit or both from the gage carrier.

40. The carrier of any one of claims 1-27 or the strain gage of any one of claims 28-39 wherein the support bar, the unitary body or both are fabricated from a material selected from stainless steel, a low coefficient of expansion metal alloy, a ceramic, a composite material, a plastic or polymeric material.

41. An optical fiber sensing system comprising one or more of the strain gages of any one or more of the gages of claims 28-40.

42. The strain gage of any one of claims 28-40 further comprising a displacement transducer.

43. A device for measurement of displacement which comprises a strain gage of any of claims 28-40.

44. A device for measuring force comprising the strain gage of any one of claims 28-40 wherein the strain gage is attached to a load cell responsive to the force to be measured.

45. A device for measuring pressure comprising the strain gage of any one of claims 28-40 wherein the strain gage is attached to a diaphragm that is responsive to the pressure to be measured.

46. An accelerometer comprising a strain gage of any one of claims 28-40.

47. The accelerometer of claim 46 wherein the strain gage is attached to a mass which is responsive to the acceleration to be measured.

48. A temperature measurement device which comprises a strain gage of any one of claims 28-40.

49. A method for measuring strain in a test specimen which comprises the step of mounting a strain gage of any of claims 28-40 on a test specimen, coupling light of appropriate wavelength into the optical fiber of the strain gage and detecting light reflected by the fiber Bragg grating of the optical fiber or detecting light transmitted through the fiber Bragg grating to detect changes in the wavelength reflected by the fiber Bragg grating to detect strain in the gage and in the test specimen.

## Patentansprüche

1. Messträger (200) für einen Faseroptik-Dehnungsmesser (100) mit einer optischen Faser (102), umfassend:
eine Trägerschiene (201), die sich entlang einer Längsachse (207) des Trägers erstreckt,
eine erste und eine zweite Montagefläche (203a, 203b), von denen jede an einem Ende der Trägerschiene positioniert und starr angefügt ist, um den Dehnungsmesser auf eine Oberfläche eines Prüfkörpers anzubringen,
ein erstes und ein zweites Faseroptik-Befestigungselement (202a, 202b), die in Längsrichtung voneinander beabstandet sind, um die optische Faser parallel zu der Längsachse des Trägers zu sichern,
wobei das erste Befestigungselement starr mit der ersten Montagefläche verbunden ist und das zweite Befestigungselement starr mit der zweiten Montagefläche verbunden ist, und wobei sich die Trägerschiene zwischen den ersten und den zweiten Befestigungselementen erstreckt, wobei zumindest ein Abschnitt (204) der Trägerschiene in Bezug auf Ausdehnung, Komprimierung oder beides entlang der Längsachse des Trägers elastisch ist.

2. Messträger nach Anspruch 1, wobei die Trägerschiene einen einheitlichen Körper bildet.

3. Messträger nach Anspruch 1, wobei die erste und die zweite Montagefläche, das erste und das zweite Faseroptik-Befestigungselement und die Trägerschiene einen einheitlichen Körper bilden.

4. Messträger nach einem der Ansprüche 2 oder 3, wobei der einheitliche Körper aus zusammenhängendem Material hergestellt ist.

5. Messträger nach einem der Ansprüche 1 - 4, wobei der elastische Abschnitt der Trägerschiene aus einer Vielzahl Kanälen besteht, die in der Trägerschiene gebildet sind, wobei die Kanäle senkrecht zu der Längsachse des Trägers ausgerichtet sind.

6. Messträger nach Anspruch 5, wobei die Vielzahl von Kanälen Paare von zueinander beabstandeten Kanälen umfasst, die sich von voneinander abgewandten Seiten der Trägerschiene über zumindest einen Abschnitt der Breite der Trägerschiene erstrecken.

7. Messträger nach Anspruch 6, wobei sich jeder Kanal quer zur Längsachse des Trägers erstreckt.

8. Messträger nach einem der Ansprüche 5 - 7, wobei die Vielzahl von Kanälen ein Muster bildet, das in Bezug auf die Längsachse des Trägers symmetrisch ist.

9. Messträger nach einem der Ansprüche 5 - 8, wobei jeder Kanal aus der Vielzahl von Kanälen sich durch die gesamte Dicke der Trägerschiene erstreckt.

10. Messträger nach einem der Ansprüche 1 - 4, wobei der elastische Abschnitt der Trägerschiene aus einer oder mehreren Federstrukturen besteht, die zwischen dem ersten und dem zweiten Faseroptik-Befestigungselement positioniert oder gebildet sind.

11. Messträger nach Anspruch 10, wobei der elastische Abschnitt der Trägerschiene eine Federstruktur ist.

12. Messträger nach Anspruch 10, wobei der elastische Abschnitt der Trägerschiene aus zwei Federstrukturen gebildet ist, die in der Trägerschiene voneinander beabstandet sind.

13. Messträger nach einem der Ansprüche 10 - 12, wobei die Federstruktur in der Trägerschiene gebildet wird, indem eine Ausnehmung darin eingebracht ist.

14. Messträger nach Anspruch 13, wobei die Ausnehmung eine Bogenfeder bildet.

15. Messträger nach einem der Ansprüche 13 oder 14, wobei die Ausnehmung in Bezug auf die Längsachse des Trägers symmetrisch ist.

16. Messträger nach einem der Ansprüche 13 - 15, wobei die Länge der Ausnehmung senkrecht zur Längsachse des Trägers ausgerichtet ist.

17. Messträger nach einem der Ansprüche 1 - 16, wobei die Trägerschiene einen elastischen Bereich aufweist, der benachbart zu einem Ende der Trägerschiene angeordnet ist.

18. Messträger nach einem der Ansprüche 1 - 16, wobei die Trägerschiene zwei elastische Bereiche aufweist, die benachbart zu jedem Ende der Trägerschiene angeordnet sind.

19. Messträger nach Anspruch 18, wobei der Träger eine Querachse senkrecht zu der Längsachse und parallel zu der Breite des Trägers aufweiset und die den Träger zweiteilt, und wobei die zwei elastischen Bereiche in Bezug auf die Querachse symmetrisch sind.

20. Messträger nach einem der Ansprüche 1 - 4, wobei der elastische Bereich ein elastomeres Material umfasst oder daraus hergestellt ist.

21. Messträger nach Anspruch 1, der aus einer Vielzahl von Komponenten hergestellt ist, die operativ mit einem oder mehreren Befestigungsmitteln verbunden sind.

22. Messträger nach Anspruch 21, wobei die Befestigungsmittel ausgewählt sind aus einer Schweißnaht, Leim, Epoxidharz oder anderem Klebstoff, einer Schraube, einer Klammer, einem Bolzen oder einem Haken.

23. Messträger nach einem der Ansprüche 1 - 22, wobei der Träger ausreichend elastisch ist, um eine Variation des Abstands zwischen dem ersten und dem zweiten Faserbefestigungselement entlang der Längsachse von 250 bis 750 Mikrometern zu gestatten.

24. Messträger nach einem der Ansprüche 1 - 22, wobei der Träger ausreichend elastisch ist, um eine Variation des Abstands zwischen dem ersten und dem zweiten Faserbefestigungselemente entlang der Längsachse von zumindest 500 Mikrometern zu gestatten.

25. Messträger nach einem der Ansprüche 1 - 24, der eine starre Anbringung der optischen Faser an einen Testkörper an zwei Punkten bereitstellt, indem wenig Widerstand hinsichtlich einer Variation des Abstands zwischen den Anbringungspunkten entlang der Längsachse bereitgestellt ist.

26. Messträger nach einem der Ansprüche 1 - 25, wobei eine Federkraft zum Vorspannen der optischen Faser bereitgestellt ist, um eine Messung der Dehnung sowie der Stauchung zu ermöglichen.

27. Messträger nach einem der Ansprüche 1 - 26, wobei ferner ein axialer Schlitz entlang der Längsachse des Trägers umfasst ist, um die optische Faser aufzunehmen, wenn die optische Faser an dem ersten und dem zweiten Faserbefestigungselement starr an den Träger angefügt ist.

28. Messträger nach einem der Ansprüche 1 - 27, wobei ferner eine optische Faser umfasst ist, die an zwei Punkten entlang ihrer Länge an der Längsachse des Messträgers befestigt ist und dazu parallel ausgerichtet ist, wodurch ein Faseroptik-Dehnungsmesser gebildet wird, wobei die optische Faser ein oder mehrere Bragg'sche Fasergitter enthält, von denen sich zumindest ein Bragg'sches Fasergitter innerhalb der Länge der Faser zwischen den Befestigungspunkten des Trägers angeordnet ist.

29. Dehnungsmesser nach Anspruch 28, ferner umfassend ein oder mehrere Pufferrohre, um die optische Faser zu schützen.

30. Dehnungsmesser nach Anspruch 28 oder 29, wobei die die optische Faser vorgespannt wird, bevor sie an dem Träger befestigt wird, so dass der Dehnungsmesser sowohl bei Stauchung als auch bei Dehnung arbeiten kann.

31. Dehnungsmesser nach einem der Ansprüche 28 - 30, wobei das eine oder mehrere Bragg'sche Fasergitter durch eine Polyimid-Beschichtung geschützt sind.

32. Dehnungsmesser nach einem der Ansprüche 28 - 30, wobei das eine oder mehrere Bragg'sche Fasergitter durch eine Metall- oder Metalllegierungs-Beschichtung geschützt sind.

33. Dehnungsmesser nach einem der Ansprüche 28 - 32, wobei die Faser an dem Träger unter Verwendung eines Klebstoffs befestigt wird.

34. Dehnungsmesser nach einem der Ansprüche 28 - 32, wobei die Faser an dem Träger durch körperliches Klammern oder Crimpen auf der Faser befestigt ist.

35. Dehnungsmesser nach einem der Ansprüche 28 - 32, wobei die Faser an dem Träger unter Verwendung von Metall- oder Legierungslötmitteln befestigt ist.

36. Dehnungsmesser nach einem der Ansprüche 28 - 32, wobei die Faser an dem Träger unter Verwendung von Niedertemperatur-Glaslot befestigt ist.

37. Dehnungsmesser nach einem der Ansprüche 28 - 36, ferner umfassend eine Einzelfaseranbindung, die sich von dem Dehnungsmesser erstreckt.

38. Dehnungsmesser nach einem der Ansprüche 28 - 36 mit einer Doppelfaseranbindung, die von dem Dehnungsmesser ausgeht.

39. Dehnungsmesser nach einem der Ansprüche 28 - 38, ferner umfassend Spannungsentlastungselemente, um die optische Faser bei Eintritt, Austritt oder beidem in den oder aus dem Messträger zu schützen.

40. Messträger nach irgend einemder Ansprüche 1 - 27 oder Dehnungsmesser nach einem der Ansprüche 28 - 39 wobei die Trägerschiene, der einheitliche Körper oder beide aus einem Material hergestellt sind, das ausgewählt ist aus rostfreiem Stahl, einer Metalllegierung mit niedrigem Ausdehnungskoeffizienten, einer Keramik, einem Verbundmaterial, einem Kunststoff oder einem Polymermaterial.

41. Faseroptik-Sensorsystem, das einen oder mehrere Dehnungsmesser gemäß irgendeinem der Dehnungsmesser aus Anspruch 28 - 40 umfasst.

42. Dehnungsmesser nach einem der Ansprüche 28 - 40, ferner umfassend einen Wegmesswertgeber.

43. Eine Vorrichtung zur Messung der Verschiebung, die einen Dehnungsmesser nach einem der Ansprüche 28 - 40 umfasst.

44. Vorrichtung zur Kraftmessung, umfassend den Dehnungsmesser nach einem der Ansprüche 28 - 40, wobei der Dehnungsmesser an eine Messdose angefügt ist, die auf die zu messende Kraft anspricht.

45. Vorrichtung zur Druckmessung, umfassend den Dehnungsmesser nach einem der Ansprüche 28 - 40, wobei der Dehnungsmesser an eine Membran angefügt ist, die auf den zu messenden Druck anspricht.

46. Beschleunigungsmesser, umfassend einen Dehnungsmesser nach einem der Ansprüche 28 - 40.

47. Beschleunigungsmesser nach Anspruch 46, wobei der Dehnungsmesser an eine Masse befestigt ist, die auf die zu messende Beschleunigung anspricht.

48. Temperaturmessvorrichtung, die einen Dehnungsmesser nach einem der Ansprüche 28 - 40 umfasst.

49. Verfahren zur Dehnungsmessung an einem Testkörper, welches die Schritte des Anbringens eines Dehnungsmessers nach einem der Ansprüche 28 - 40 an einem Testkörper,
des Einkoppelns von Licht mit geeigneter Wellenlänge in die optische Faser des Dehnungsmessers und
des Detektierens des Lichts, das durch das Bragg'sche Fasergitter der optische Faser reflektiert wird oder
des Detektierens des Lichts, das durch das Bragg'sche Fasergitter geleitet wird, umfasst, um Änderungen der Wellenlänge, die durch das Bragg'sche Fasergitter reflektiert wird, zu detektieren, um Dehnung in dem Dehnungsmesser und in dem Prüfkörper zu ermitteln.

## Revendications

1. Support de jauge (200) pour une jauge de contrainte à fibre optique (100) ayant une fibre optique (102), comportant :
une barre de support (201) s'étendant le long d'un axe longitudinal (207) du support,
des première et seconde surfaces de montage (203a, 203b) positionnées chacune et fixées de manière rigide à une extrémité de la barre de support, pour montage de la jauge de contrainte sur une surface d'un spécimen de test,
des premier et second éléments de fixation de fibre optique (202a, 202b), qui sont espacés longitudinalement l'un de l'autre pour fixer la fibre optique parallèlement à l'axe longitudinal du support,
le premier élément de fixation étant fixé de manière rigide sur la première surface de montage, et le second élément de fixation étant fixé de manière rigide sur la seconde surface de montage, la barre de support s'étendant entre les premier et second éléments de fixation, au moins une partie (204) de la barre de support étant élastique par rapport à l'extension, à la compression ou aux deux le long de l'axe longitudinal du support.

2. Support de jauge selon la revendication 1, dans lequel la barre de support forme un corps unitaire.

3. Support de jauge selon la revendication 1, dans lequel les première et seconde surfaces de montage, les premier et second éléments de fixation de fibre optique et la barre de support forment un corps unitaire.

4. Support de jauge selon la revendication 2 ou 3, dans lequel le corps unitaire est fabriqué à partir d'un matériau voisin.

5. Support de jauge selon l'une quelconque des revendications 1 à 4, dans lequel la partie élastique de la barre de support est constitué d'une pluralité de canaux formés dans la barre de support, les canaux étant orientés perpendiculairement à l'axe longitudinal du support.

6. Support de jauge selon la revendication 5, dans lequel la pluralité de canaux comportent des paires de canaux espacés s'étendant à travers au moins une partie de la largeur de la barre de support à partir de côtés opposés de la barre de support.

7. Jauge selon la revendication 6, dans laquelle chaque canal s'étend à travers l'axe longitudinal du support.

8. Jauge selon l'une quelconque des revendications 5 à 7, dans laquelle la pluralité de canaux forment un motif qui est symétrique par rapport à l'axe longitudinal du support.

9. Jauge selon l'une quelconque des revendications 5 à 8, dans laquelle chaque canal de la pluralité de canaux s'étend à travers toute l'épaisseur de la barre de support.

10. Support de jauge selon l'une quelconque des revendications 1 à 4, dans lequel la partie élastique de la barre de support est constitué d'une ou de plusieurs structures de ressort positionnées ou formées entre les premier et second éléments de fixation de fibre optique.

11. Support de jauge selon la revendication 10, dans lequel la partie élastique de la barre de support est une structure de ressort.

12. Support de jauge selon la revendication 10, dans lequel la partie élastique de la barre de support est formée à partir de deux structures de ressort espacées sur la barre de support.

13. Support de jauge selon l'une quelconque des revendications 10 à 12, dans lequel la structure de ressort est une structure formée dans la barre de support en y introduisant une cavité.

14. Support de jauge selon la revendication 13, dans lequel la cavité forme un ressort en arc.

15. Support de jauge selon la revendication 13 ou 14, dans lequel la cavité est symétrique par rapport à l'axe longitudinal du support.

16. Support de jauge selon l'une quelconque des revendications 13 à 15, dans lequel la longueur de la cavité est perpendiculaire à l'axe longitudinal du support.

17. Support de jauge selon l'une quelconque des revendications 1 à 16, dans lequel la barre de support a une zone élastique positionnée adjacente à une extrémité de la barre de support.

18. Support de jauge selon l'une quelconque des revendications 1 à 16, dans lequel la barre de support a deux zones élastiques positionnées adjacentes à chaque extrémité de la barre de support.

19. Support de jauge selon la revendication 18, dans lequel le support a un axe latéral perpendiculaire à l'axe longitudinal et parallèle à la largeur du support, qui recoupe le support, et dans lequel les deux zones élastiques sont symétriques par rapport à l'axe latéral.

20. Support de jauge selon l'une quelconque des revendications 1 à 4, dans lequel la zone élastique comprend ou est fabriquée à partir d'un matériau élastomérique.

21. Support de jauge selon la revendication 1, fabriqué à partir d'une pluralité de composants qui sont reliés de manière opérationnelle avec une ou plusieurs fixations.

22. Support de jauge selon la revendication 21, dans lequel les fixations sont sélectionnées parmi un joint soudé, de la colle, un époxy ou un autre adhésif, une vis, une pince, un boulon ou une agrafe.

23. Support de jauge selon l'une quelconque des revendications 1 à 22, dans lequel le support a une élasticité suffisante pour permettre une variation de la distance entre les premier et second éléments de fixation de fibre le long de l'axe longitudinal de 250 à 750 microns.

24. Support de jauge selon l'une quelconque des revendications 1 à 22, dans lequel le support a une élasticité suffisante pour permettre une variation de la distance entre les premier et second éléments de fixation de fibre le long de l'axe longitudinal, d'au moins 500 microns.

25. Support de jauge à fibre selon l'une quelconque des revendications 1 à 24, qui fournit une fixation rigide de la fibre optique sur un spécimen de test au niveau de deux points tout en fournissant une faible résistance à une variation de la distance entre les points de fixation le long de l'axe longitudinal.

26. Support de jauge selon l'une quelconque des revendications 1 à 25, comportant une force de ressort pour tendre la fibre optique préalablement en permettant une mesure des contraintes de tension de même que de compression.

27. Support de jauge selon l'une quelconque des revendications 1 à 26, comportant en outre une fente axiale le long de l'axe longitudinal du support pour recevoir la fibre optique lorsque la fibre optique est fixée de manière rigide sur le support au niveau des premier et second éléments de fixation de fibre.

28. Support de jauge selon l'une quelconque des revendications 1 à 29, comportant en outre une fibre optique fixée au niveau de deux points le long de sa longueur et orientée parallèlement à l'axe longitudinal du support de jauge, en formant ainsi un support de jauge de contrainte à fibre optique, dans lequel la fibre optique contient un ou plusieurs réseaux de Bragg sur fibre, dont au moins un desdits réseaux de Bragg sur fibre est sur la longueur de la fibre entre les points de fixation du support.

29. Jauge de contrainte à fibre optique selon la revendication 28, comportant en outre un ou plusieurs tubes tampons de protection de la fibre optique.

30. Jauge de contrainte selon la revendication 28 ou 29, dans laquelle la fibre optique est tendue préalablement avant qu'elle ne soit fixée au support, de sorte que la jauge peut fonctionner en compression de même qu'en tension.

31. Jauge de contrainte selon l'une quelconque des revendications 28 à 30, dans laquelle les un ou plusieurs réseaux de Bragg sur fibre sont protégés par un revêtement de polyimide.

32. Jauge de contrainte selon l'une quelconque des revendications 28 à 30, dans laquelle les un ou plusieurs réseaux de Bragg sur fibre sont protégés par un revêtement métallique ou un revêtement d'alliage métallique.

33. Jauge de contrainte selon l'une quelconque des revendications 28 à 32, dans laquelle la fibre est fixée sur le support en utilisant un adhésif.

34. Jauge de contrainte selon l'une quelconque des revendications 28 à 32, dans laquelle la fibre est fixée sur le support par serrage physique ou sertissage sur la fibre.

35. Jauge de contrainte selon l'une quelconque des revendications 28 à 32, dans laquelle la fibre est fixée sur le support en utilisant de la brasure métallique ou d'alliage.

36. Jauge de contrainte selon l'une quelconque des revendications 28 à 32, dans laquelle la fibre est fixée sur le support en utilisant une brasure de verre basse température.

37. Jauge de contrainte selon l'une quelconque des revendications 28 à 36, comportant une connexion à fibre unique s'étendant à partir de la jauge.

38. Jauge de contrainte selon l'une quelconque des revendications 28 à 36, ayant une connexion de fibre à deux extrémités émanant de la jauge.

39. Jauge de contrainte selon l'une quelconque des revendications 28 à 38, comportant en outre des éléments de libération de contrainte pour protéger la fibre optique lors de l'entrée dans le support de jauge, de la sortie à partir de celui-ci, ou des deux.

40. Support selon l'une quelconque des revendications 1 à 27, ou jauge de contrainte selon l'une quelconque des revendications 28 à 39, où la barre de support, le corps unitaire ou les deux sont fabriqués à partir d'un matériau sélectionné parmi de l'acier inoxydable, un alliage métallique à faible coefficient de dilatation, une céramique, un matériau composite, une matière plastique ou un matériau polymérique.

41. Système de détection à fibre optique comportant une ou plusieurs des jauges de contrainte d'une quelconque ou de plusieurs des jauges des revendications 28 à 40.

42. Jauge de contrainte selon l'une quelconque des revendications 28 à 40, comportant en outre un transducteur de déplacement.

43. Dispositif de mesure de déplacement qui comporte une jauge de contrainte selon l'une quelconque des revendications 28 à 40.

44. Dispositif de mesure de force comportant une jauge de contrainte selon l'une quelconque des revendications 28 à 40, dans lequel la jauge de contrainte est fixée sur une cellule de charge sensible à la force devant être mesurée.

45. Dispositif de mesure de pression comportant la jauge de contrainte selon l'une quelconque des revendications 28 à 40, dans lequel la jauge de contrainte est fixée à un diaphragme qui est sensible à la pression devant être mesurée.

46. Accéléromètre comportant une jauge de contrainte selon l'une quelconque des revendications 28 à 40.

47. Accéléromètre selon la revendication 46, dans lequel la jauge de contrainte est fixée sur une masse qui est sensible à l'accélération devant être mesurée.

48. Dispositif de mesure de température qui comporte une jauge de contrainte selon l'une quelconque des revendications 28 à 40.

49. Procédé pour mesurer une contrainte dans un spécimen de test, qui comporte l'étape consistant à monter une jauge de contrainte selon l'une quelconque des revendications 28 à 40 sur un spécimen de test, à coupler de la lumière d'une longueur d'onde appropriée dans la fibre optique de la jauge de contrainte et à détecter la lumière réfléchie par le réseau de Bragg sur fibre de la fibre optique, ou à détecter la lumière transmise à travers le réseau de Bragg sur fibre pour détecter des changements dans la longueur d'onde réfléchie par le réseau de Bragg sur fibre pour détecter une contrainte dans la jauge et dans le spécimen de test.
